# EUROPEAN PATENT SPECIFICATION

(11) **EP 1 433 313 B1**
(45) Date of publication and mention of the grant of the patent: **17.05.2017**
(21) Application number: 02797758.6
(22) Date of filing: 27.08.2002
(51) Int. Cl.: G06F 3/0482, H04N 21/431, H04N 21/443, H04N 21/47, H04N 21/482

(54) **SYSTEM AND METHOD FOR FOCUSED NAVIGATION WITHIN AN INTERACTIVE TELEVISION USER INTERFACE**
SYSTEM UND VERFAHREN ZUR KONZENTRIERTEN NAVIGATION IN EINER INTERAKTIVEN FERNSEHBENÜTZERSCHNITTSTELLE
SYSTÈME ET PROCÉDÉ DE NAVIGATION FOCALISÉE DANS UNE INTERFACE UTILISATEUR TÉLÉVISUELLE INTERACTIVE

(30) Priority: 29.08.2001 US 315731 P; 06.09.2001 US 317612 P; 26.09.2001 US 324997 P; 12.03.2002 US 97174; 12.03.2002 US 97195
(43) Date of publication of application: 30.06.2004
(73) Proprietor: Arris Group, Inc., Suwanee, GA 30024 (US)
(72) Inventor: BILLMAIER, James, Woodinville, WA 98072 (US); KELLUM, John, Seattle, WA 98122 (US); REID, Dewey, San Rafael, CA 94903 (US); ROGAN, Philip, Bozeman, MT 59715 (US)
(74) Representative: Burton, Nick
(86) International application number: PCT/US2002/027289
(87) International publication number: WO 2003/021915

(56) References cited:
- US-A- 5 398 074
- US-A- 5 602 596
- US-A- 5 621 456
- US-A- 6 028 600
- US-A- 6 163 345
- US-B1- 6 175 362
- US-B1- 6 266 098
- US-B1- 6 281 940

## Description

The present invention relates generally to interactive television (ITV) systems. More specifically, the present invention relates to a system and method for focused navigation within a user interface of an ITV system.

Recent advances in technology have vastly increased the number of available channels within ITV systems. As used herein, a "channel" refers to any capability of the ITV system that a user may selectively activate. For example, one type of channel may be a broadcast channel, such as NBC@,HBO@,ESPN@, etc. Another type of channel may be an interactive channel, such as a World Wide Web browser, an e-mail program, a videophone, a personal video recorder, a directory of contacts, various search functions or filters, and so forth. Many ITV systems now offer hundreds of broadcast channels and a variety of interactive channels.

US-6281940 discloses a method of displaying previewed channels allowing rotation through multiple channels. Information corresponding to previewed channels is displayed using a sequential arrangement having a main channel location and several remaining channel locations. A currently previewed channel resides in the main channel location. The channels move along the sequential arrangement and enter the main channel location for previewing. Thus the user can cycle through available channels or a subset of channels.

US-6163345 discloses a method for providing station and programming information in a multiple station broadcast system. An online guide is provided allowing the user of a multiple channel television broadcast system to access programming information. When the guide is presented to the use, the guide covers only a portion of the television screen or display. The remaining portion of the television screen continues to broadcast the audio and video of the currently selected program. The user may scan through the guide from one broadcast station to another. The system responds by automatically tuning to the channel pointed to by the pointer and provides the audio and display video in the portion of the screen not covered by the guide.

US-6175362 discloses a TV graphical user interface providing selection among various lists of TV channels. The graphical user interface allows users to create customised lists of TV channels. The TV graphical user interface displays a graphical channel changer composed of channel boxes that show numbers and logos of TV channels in a currently selected list. To select a required TV channel, the user clicks on the graphical channel box that indicates the required channel.

Unfortunately, despite the rapid advances in ITV systems, user interfaces for these ITV systems remain largely unchanged. For example, a user of a modem ITV system must scan through user options and channels in much the same way as a user selected a TV channel twenty years ago, i.e. by repeatedly pressing channel up/down buttons on a remote control. Such an outdated approach is far too slow and inconvenient to facilitate effective navigation o a modem ITV system.

Accordingly, it would be an advancement in the art to provide a user interface for an ITV system that allows for rapid and efficient navigation of a plurality of channels without the drawbacks of conventional approaches. In particular, it would be an advancement in the art to provide a user interface in which a user need not repeatedly press a button to display each available option, as is often the case with a conventional television or ITV interface.

According to a first aspect of the invention, there is provided a method according to claim 1.

The visual cards may be displayed in rapid succession in a same location of the display screen.

The method may further comprise: storing a graphical representation of each of a plurality of options associated with an information system.

At least one graphical representation can comprise one of an icon, an image, and a video frame.

The single user action can comprise activating a first control on a remote control, and wherein the additional user action comprises one of activating a second control on the remote control and releasing the first control.

The method can further comprise displaying at least a portion of a previously-displayed graphical representation outside the focus area in a first location; and displaying at least a portion of an ensuing graphical representation outside of the focus area in a second location.

According to another aspect of the invention, there is provided a system according to claim 25.

The interactive channels can be selected from the group consisting of a World Wide Web browser, an e-mail program, a videophone, a personal video recorder, and a directory of contacts. At least one broadcast channel can be graphically represented on a visual card by a video frame taken from a television program.

A displayed visual card can occupy between about one-fifth and about one-fourth of a television screen.

The focus area can comprise a center portion of the user interface.

The single user action can comprise pressing and holding down a control on a remote control.

The additional user action can comprise releasing the control on the remote control.

The single user action can comprise activating a first control on a remote control.

The additional user action can comprise re-activating the first control.

The additional user action can comprise activating a second control on the remote control.

The display unit can be further configured to enhance the visual card shown in the focus area in response to the additional user action.

The channels represented by the visual cards can comprise broadcast channels, and the visual card can be enhanced by displaying a reduced-size presentation of the broadcast channel in place of the visual card.

The visual card can be enhanced by displaying information within the user interface that is descriptive of the represented channel.

The visual card can be enhanced by animating a graphical representation on the visual card.

The display unit can be further configured to revert to a previously-displayed visual card in response to the additional user action.

The display unit can be further configured to display the desired channel in place of the user interface in response to a user selection action being detected.

The user selection action can comprise activating a selection control on a remote control.

The user selection action can comprise not activating a control on a remote control for a set amount of time.

The visual cars can be successively displayed at a user-selected rate between about five representations per second and about eight representations per second.

The display unit can be further configured to increase a rate at which the visual cards are successively displayed in response to a user command.

The user command can comprise holding down a button on a remote control.

The rate can be increased based on how long the button is held down.

The user command can comprise pressing a button on a remote control.

The rate can be increased each time the button is pressed.

Non-exhaustive embodiments of the invention are described with reference to the figures, in which:
Fig.1 is an illustration of an ITV system;
Figs. 2-3 are illustrations of a method for focused navigation of a plurality of channels within an ITV user interface;
Figs. 4-6 are timing diagrams for a successive display of visual cards representing channels available on the ITV system;
Fig. 7 is a block diagram of physical components of a set-top box (STB);
Fig. 8 is a block diagram of logical components of a system for focused navigation of a plurality of channels within an ITV user interface; and
Fig. 9 is a flowchart illustrating a method for focused navigation of a plurality of channels within an ITV user interface.

The present invention solves the foregoing problems and disadvantages by providing a system and method for focused navigation within a user interface of an ITV system. In one embodiment, an ITV system may include a television (TV) having a display screen, a set-top box (STB), and a remote control. A graphical user interface (GUI) for the ITV system may be displayed on the display screen.

The ITV system may provide access to a plurality of "channels." As previously noted, a channel may refer to any capability of the ITV system or entertainment device that a user may selectively activate, such as a television broadcast channel, a Pay-Per-View (PPV) channel, or an Interactive Television (ITV) channel. In addition, as used herein, a channel may refer to other selectable options, such as databases, application programs, digital photographs, video clips, audio clips, MP3 files, and programs recorded by a Personal Video Recorder (PVR).

In one embodiment, a visual card is created to represent each channel that is available through the ITV system. Each visual card may include a graphical representation of the represented channel. The graphical representation may take the form of an icon (e.g., a drawing), an image (e.g., a photograph or video frame), a symbol, or the like. In certain configurations, the graphical representation may be combined with text for increased clarity.

The visual cards may be linked together or grouped in one or more sequences. In response to a single user action, the visual cards within a particular sequence may be successively displayed within a focus area of the GUI. As used herein, a "focus area" is a single location of the GUI at which the visual cards are displayed one at a time in sequence. The focus area may be located at a central or visually dominant location of the user interface, although the invention is not limited in this respect.

The single user action to initiate the successive display of visual cards may take many forms, such as pressing (or pressing and holding down) a button on a remote control. Once all of the visual cards within a particular sequence are displayed, the cycle may be repeated any number of times until halted by the user.

The visual cards may be successively displayed at a high rate of speed, preferably within the user's image recognition threshold. For instance, in one embodiment, the graphical representations may be shown at a rate between about six and eight per second (360-420 per minute).

When displayed within the focus area, the visual cards are preferably large enough to permit user recognition from a comfortable viewing distance. For instance, in one embodiment, a visual card occupies between about one-fifth and about one-fourth of the display screen.

When the user sees a visual card being displayed of a channel that he or she desires to select, the user may take some additional action and the successive display of visual cards is discontinued. For example, the additional action may be releasing the button on the remote control or pressing the same or a different button.

In certain embodiments, it may be desirable to display more than one visual card within a particular sequence in a first direction across the GUI, with one visual card being displayed within the focus area. This may provide the user with a better understanding of his or her navigational position within the sequence. For example, in one embodiment, a subset including three visual cards may be displayed vertically or horizontally across the GUI. Of course, a sequence including any number of visual cards may be displayed within the scope of the invention.

Additionally, it may be desirable to create different sequences of visual cards for each type of channel associated with the ITV system. For example, a first sequence may include visual cards that represent broadcast channels, and a second sequence may include visual cards that represent interactive channels.

A subset of visual cards from different sequences may be displayed in different directions across the GUI. For example, in one embodiment, a first subset including three visual cards from a first sequence may be displayed horizontally across the GUI, and a second subset including three visual cards from a second sequence may be displayed vertically across the GUI. These two subsets may intersect to define the focus area. As before, a single visual card may be displayed within the focus area.

Regardless of the number of visual cards displayed within the GUI at any given time, a particular visual card representing a desired channel may be displayed within the focus area once navigation has been discontinued. This remaining visual card may be enhanced to further distinguish it from previously displayed visual cards, and/or to provide the user with additional information about the represented channel.

The remaining visual card may be enhanced in a variety of ways. For example, the visual card may be enhanced by displaying information within the GUI that is descriptive of the represented channel. Alternatively, where the remaining visual card represents a broadcast channel, the visual card may be enhanced by displaying a reduced-size presentation of the broadcast channel in the focus area in place of the visual card. Alternatively still, the visual card may be enhanced by animating the graphical representation on the visual card. Additionally, the visual card may be enhanced by enlarging it with respect to other visual cards within the GUI and/or with respect to its original size.

The user may select the channel associated with the displayed visual card by taking a selection action. The selection action may be, for instance, activating a selection control on the remote control. In response to the selection action, the desired channel may be displayed in place of the GUI on the display screen.

If the user's reaction time is fast enough, the visual card representing the desired channel remains displayed in the focus area once navigation is discontinued. If not, one or more visual cards may be subsequently displayed. In such a case, the user may manually backtrack to the desired visual card by, for example, repeatedly activating a suitable control on a remote control. In an alternative embodiment, the user's delayed response may be automatically compensated for by reverting to a previously displayed visual card once the user halts the successive display.

The rate at which the visual cards are successively displayed may be increased in response to the user taking a suitable action. For example, the rate at which visual cards are successively displayed may increase gradually or according to a stepwise function. The user action to increase the display rate may take many forms, such as holding down a button on the remote control for a set amount of time or by repeatedly pressing a button on the remote control.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

Furthermore, the described features, structures, or characteristics may be combined in any suitable manner in one or more embodiments. In the following description, numerous specific details are provided, such as examples of programming, software modules, user selections, network transactions, database queries, database structures, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

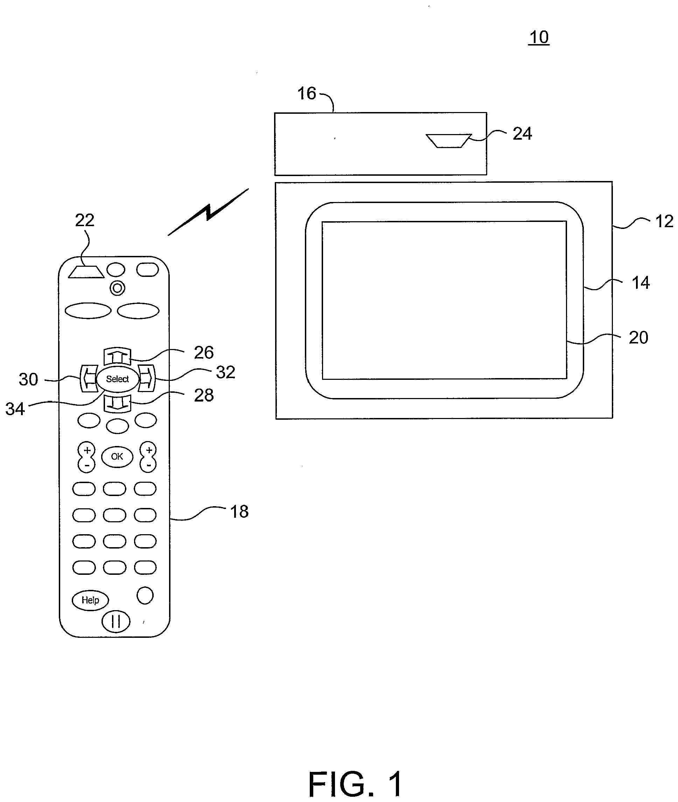

Referring now to FIG. 1, there is shown an illustration of an ITV system 10. The ITV system 10 includes, in one embodiment, a television (TV) 12 having a display screen 14, a set-top box (STB) 16, and a remote control 18.

The STB 16 is a consumer electronics device that serves as a gateway between the TV 12 and a broadband network (not shown), such as a cable or satellite network. The STB 16 receives TV signals and other information from the broadband network and processes the same for display on the display screen 14. The STB 16 may also be responsible for displaying a graphical user interface (GUI) 20 on the display screen 14.

In alternative embodiments, the term "STB" may broadly encompass a personal computer (PC) that performs STB-like functions. In such an embodiment, a PC may be used to process TV signals and other data received from the broadband network. The PC may operate in the context of a home network to provide display signals to a variety of devices, including one or more television sets, computer monitors, personal digital assistants (PDAs), cellular phones, and the like. A variety of home networking systems and protocols may be used, such as Ethernet, 802.11 b, Bluetooth, etc.

The remote control 18 is provided for convenient operation of the STB 16 and the TV 12. The remote control 18 may include a wireless transmitter 22 for transmitting control signals to a wireless receiver 24 within the STB 16. In addition, the remote control 18 may include a number of buttons or other similar controls. For instance, the remote control 18 may include a "Channel-Up" button 26, a "Channel-Down" button 28, a "Channel-Left" button 30, a "Channel-Right" button 32, and a "Select" button 34. Of course, a variety of other buttons or controls may be provided within the scope of the invention. In alternative implementations, the remote control 18 may be embodied as a keyboard, mouse, or other input device.

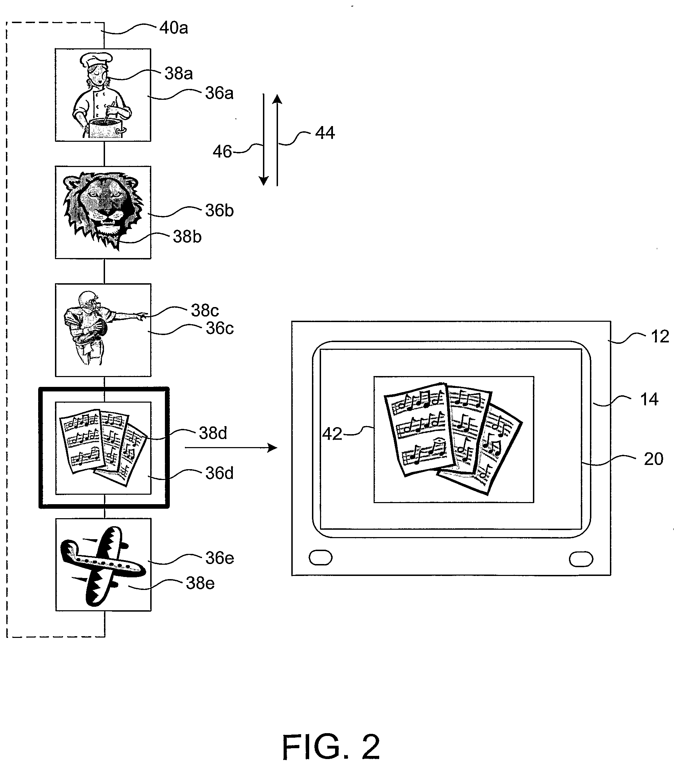

FIG. 2 illustrates one embodiment of a method for focused navigation of a plurality of channels within an ITV user interface. As previously noted, a channel refers to any capability of the ITV system 10 that a user may selectively activate. Examples of channels include broadcast channels and interactive channels.

In one embodiment, a visual card 36 is created to represent each channel that is available through the ITV system 10. Each visual card 36 may be stored as a graphics file in any suitable format in a memory, disk drive, or the like, within the ITV system 10.

Each visual card 36 may include a graphical representation 38 of the represented channel. The graphical representation 38 may take the form of an icon (e.g., a drawing), an image (e.g., a photograph or video frame), a symbol, or the like. Where the visual cards 36 represent broadcast channels, the graphical representation 38 may represent the broadcast channel generally or the particular TV program being shown on the broadcast channel. For example, each graphical representation 38 may take the form of a video frame taken from the current TV program being shown on the broadcast channel. In one embodiment, video frames may be captured at periodic intervals by a broadcast center and downloaded by an STB 16 for use in one or more visual cards 36. Alternatively, video frames may be captured by the STB 16, itself.

In the embodiment depicted in FIG. 2, the represented channels are broadcast channels, and the graphical representations 38 on the visual cards 36 take the form of icons 38 which represent the broadcast channel generally. For instance, a visual card 36a may include a chef icon 38a representing a broadcast channel related to cooking (e.g., the TV Food Network^{®}); a visual card 36b may include a lion icon 38b representing a broadcast channel related to nature *(e.g.,* The Discovery Channel^{®}); a visual card 36c may include a football player icon 38c representing a broadcast channel related to sports (e.g., ESPN^{®}); a visual card 36d may include a music icon 38d representing a broadcast channel related to music (e.g., MTV^{®}); and a visual card 36e may include an airplane icon 38e representing a broadcast channel related to travel (e.g., The Travel Channel^{®}). Of course, the visual cards 36 may also include other information (*e.g.,* descriptive text, numerals, and so forth) in addition to the graphical representations 38.

The visual cards 36 may be linked together or grouped in a sequence 40, such as the sequence 40a. The sequence 40 may take the form of a closed loop, as illustrated in FIG. 2. Alternatively, the sequence 40 may be linear. The ordering of the sequence 40 may be dictated, for example, by the numerical order of the represented channels, e.g., visual card 36a may correspond to channel 2, visual card 36b may correspond to channel 4, etc. Of course, the sequence 40 may be ordered in other ways or may be user-defined.

Within the sequence 40, one visual card 36 may be selected or active. As shown, the selected visual card 36 is displayed within a focus area 42 of the GUI 20 (e.g., brought into "focus"). As previously noted, a focus area 42 is a single location of the GUI 20 at which the visual cards 36 are successively displayed, e.g., displayed one at a time in sequence. The focus area 42 may be located at a central or visually dominant location of the user interface, although the invention is not limited in this respect. For example, the focus area may be located at the center of the GUI 20 (and/or display screen 14).

In response to a single user action, the visual cards 36 within a sequence 40 may be successively displayed within the focus area 42. For example, the visual cards 36a-e within the sequence 40a may be successively displayed within the focus area 42. Where the sequence 40 is a closed loop, the successive display may continue indefinitely until halted by the user.

The visual cards 36 may be successively displayed at a high rate of speed, preferably within the user's image recognition threshold. The image recognition threshold will vary somewhat from user to user depending on a number of factors, including age, eyesight, and so forth. Typically, however, the image recognition threshold for many users will range between 5 and 8 graphical representations per second. Of course, the display rate may be adjusted for users with unusually high or low image recognition thresholds. For instance, a user may cap the maximum display rate at a preferred value.

In one embodiment, the image recognition threshold may be determined or approximated by initially showing a user a test image and then displaying the test image at a point in a cycling sequence of graphical representations being displayed at a high rate of speed (e.g., > 10 representations per second). Thereafter, the display rate may be decreased in steps until the user recognizes the test image and presses a button, such as the "Select" button 36. The display rate at which the user first recognizes the test image may be deemed the user's image recognition threshold.

The single user action to initiate navigation may be pressing (or pressing and holding down) a button on the remote control 18. For example, the user may press the "Channel-Up" button 26 to initiate the successive display in a first direction 44 within the sequence 40, and press the "Channel-Down" button 28 to initiate navigation in the opposite direction 46. Alternatively, the user may speak a command into a microphone (either within the STB 16 or remote control 18) to initiate navigation. Of course, the user may initiate navigation in a variety of other ways within the scope of the invention.

Preferably, the visual cards 36, when displayed within the focus area 42, are sufficiently large to permit user recognition from a comfortable viewing distance for the particular display screen 14. For instance, as shown in FIG. 2, the visual card 36 occupies between about one-fifth and about one-fourth of the display screen 14.

When the user sees a visual card 36 being displayed of a channel that he or she desires to select, the user may take some additional action and the successive display of visual cards 36 may be discontinued. For example, where the successive display was initiated by pressing and holding down the "Channel-Up" button 26, the user may release the "Channel-Up" button 26 to discontinue navigation. In an alternative embodiment, where the successive display was initiated simply by pressing a button, the user may press the same or a different button to halt the successive display. Of course, the user may discontinue navigation in a variety of other ways within the scope of the invention. Once navigation is discontinued, a visual card 36 representing a desired channel is displayed within the focus area 42.

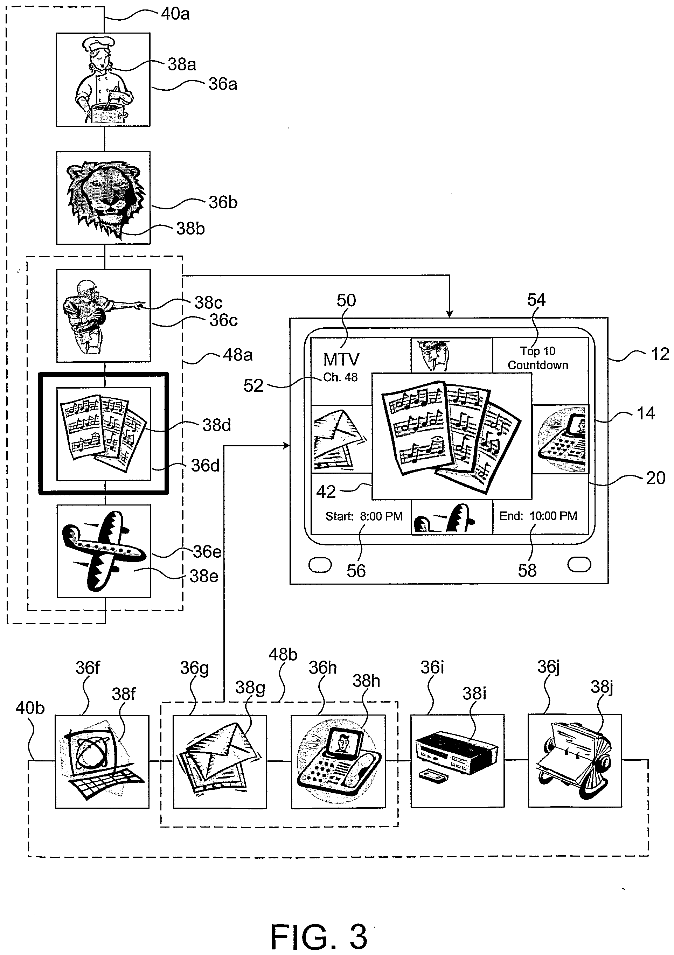

In certain embodiments, it may be desirable to display a subset 48 of the visual cards 36 within a particular sequence 40 in a first direction across the GUI 20. This may provide the user with a better understanding of his or her navigational position within the sequence 40. For example, as shown in FIG. 3, a subset 48a of the first sequence 40a of visual cards 36 may be displayed vertically across the GUI 20. The subset 48a includes the visual cards 36c-e. In particular, a portion of the visual card 36c may be displayed above the focus area 42, the entire visual card 36d may be displayed within the focus area 42, and a portion of the visual card 36e may be displayed below the focus area 42. Of course, in other embodiments the subset 48a may be displayed horizontally or in other locations of the GUI 20.

As previously noted, an ITV system 10 in accordance with the invention may include different types of channels, such as broadcast channels and interactive channels. In one implementation, it may be desirable to create a different sequence 40 of visual cards 36 for each type of channel associated with the ITV system 10. For example, as previously described, a first sequence 40a including visual cards 36a-e that represent broadcast channels. A second sequence 40b may be created including visual cards 36f-j that represent interactive channels.

As in the first sequence 40a, each visual card 36f-j in the second sequence 40b may include a graphical representation 38 of an available channel. The graphical representation 38 may take the form of an icon (*e.g.,* a drawing), an image (*e.g.,* a photograph or video frame), a symbol, or the like. In the embodiment depicted in FIG. 3, the graphical representations 38 on the visual cards 36f-j take the form of icons 38. For instance, a visual card 36f may include a computer icon 38f representing a World Wide Web browser; a visual card 36g may include an envelope icon 38g representing an e-mail program; a visual card 36h may include a videophone icon 38h representing a videophone; a visual card 36i may include a VCR icon 38i representing a personal video recorder (PVR); and a visual card 36j may include a rotary file icon 38j representing a directory of contacts.

In certain embodiments, it may be desirable to display more than one subset 48 of visual cards 36 within a sequence 40 in different directions across the GUI 20. For example, in addition to displaying the subset 48a vertically across the GUI 20, a subset 48b of the second sequence 40b of visual cards 36 is displayed horizontally across the GUI 20. The subset 48b includes the visual cards 36g-h. In particular, a portion of the visual card 36g appears to the left of the focus area 42, and a portion of the visual card 36h appears to the right of the focus area 42. Of course, in other embodiments the subset 48b may be displayed vertically or in other locations of the GUI 20.

The subset 48a of the first sequence 40a and the subset 48b of the second sequence 40b may intersect to define the focus area 42. Such an arrangement further enhances the visual dominance of the focus area 42 within the GUI 20, because visual cards 36 are directed into the focus area 42 from multiple directions. The area of intersection, and thus the focus area 42, may be located at a center portion of the GUI 20, although the invention is not limited in this respect.

Navigation of the different sequences 40 may be accomplished by different user actions. For example, the user may utilize a first set of controls (*e.g.,* the "Channel-Up" and "Channel-Down" buttons 26, 28 on the remote control 18) to navigate the sequence 40a displayed vertically across the GUI 20, and a second set of controls (*e.g.,* the "Channel-Left" and "Channel-Right" buttons 30, 32 on the remote control 18) to navigate the sequence 40b displayed horizontally across the GUI 20.

Regardless of the number of visual cards 36 displayed within the GUI 20 at any given time, a particular visual card 36 representing a desired channel may be displayed within the focus area 42 once navigation has been discontinued. This remaining visual card 36 may be enhanced to further distinguish it from previously displayed visual cards 36, and/or to provide the user with additional information about the represented channel.

As shown in FIG. 3, the visual card 36d may be enhanced by displaying information within the GUI 20 that is descriptive of the represented channel. This information may be displayed within "quadrants" that are formed by the intersection of the displayed subsets 48a-b. The quadrants may be used to display contextsensitive information about a visual card 36 in the focus area 42. Alternatively, or in addition, the quadrants may be used to display advertising, additional options, and the like. The size of the quadrants may vary depending, for instance, on the location of the intersection of the displayed subsets 48a-b. If the intersection is near the center of the GUI 20, the quadrants may be equal in size; otherwise, the relative sizes of the quadrants may vary.

As an example, because the visual card 36d in FIG. 3 represents a broadcast channel, the information may include the name 50 of the broadcast channel, the channel number 52, the name 54 of the TV program currently being broadcast on the channel, and the program's start time 56 and end time 58, as well as other useful information.

The remaining visual card 36 may be enhanced in a variety of other ways. For example, where the remaining visual card 36 represents a broadcast channel, the visual card 36 may be enhanced by displaying a reduced-size presentation of the broadcast channel in the focus area 42 in place of the visual card 36. Other visual cards 36 and/or information may remain displayed outside the focus area 42 during this reduced-size presentation. Such an approach enables the user to view a portion of a TV program without losing his or her navigational position within the GUI 20. Alternatively, the visual card 36 may be enhanced by animating the graphical representation 38 on the visual card 36. Additionally, the visual card 36 may be enhanced by enlarging it with respect to other visual cards 36 within the GUI 20 and/or with respect to its original size. The enlargement may be accomplished through pixel duplication and/or interpolation. Alternatively, a higher-resolution image may be used. Of course, the remaining visual card 36 may be enhanced in a number of other ways within the scope of the invention.

The user may select the channel associated with the displayed visual card 36 by taking a selection action. The selection action may be activating a selection control on the remote control 18, such as the "Select" button 34. Alternatively, the selection action may simply be waiting a set amount of time without activating any controls on the remote control 18. In response to the selection action, the desired channel may be displayed in place of the GUI 20 on the display screen 14, e.g., "maximized" to fill the entire display screen 14.

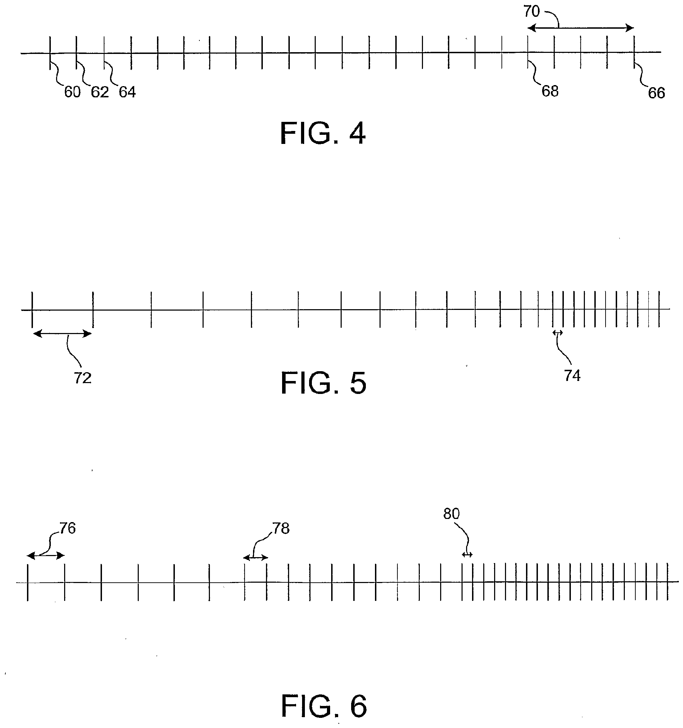

Referring now to FIG. 4, there is shown a timing diagram illustrating the successive display of visual cards 36 in accordance with the invention. Each vertical line within the timing diagram represents a moment in time at which a particular visual card 36 is displayed. In particular, in response to a single user action, visual cards 36 are successively displayed at moments 60, 62, 64, and so on. When the user takes some additional action to discontinue navigation, the successive display of visual cards 36 is halted at moment 66.

If the user's reaction time is fast enough, the visual card 36 representing the desired channel remains displayed in the focus area 42 once navigation is discontinued. However, the user's reaction time may not be fast enough and one or more visual cards 36 may be subsequently displayed. In such a case, the user may manually backtrack to the desired visual card 36 by, for example, repeatedly activating a suitable control on the remote control 18. For example, briefly pressing the "Channel-Up" or "Channel-Down" buttons 26, 28 may result in the previous or next visual card 36, respectively, being displayed.

In alternative embodiments, the user's delayed response may be automatically compensated for by reverting to a previously displayed visual card 36 once the user halts the successive display. For example, if a visual card 36 representing a desired channel is displayed within the GUI 20 at moment 68, but the user takes the additional action to discontinue navigation at moment 66, the ITV system 10 may be configured to automatically revert to the visual card 36 displayed a set amount of time before the action was taken. The time difference 70 between moments 68 and 66 corresponds to an anticipated time delay between the user's recognition of a desired visual card 36 and the user's additional action. Because the actual time delay between recognition and release will vary depending on a number of factors such as age, reaction time, agility, and so forth, it may be desirable to allow a user to adjust the time difference 70. In addition, the time difference 70 may vary depending on the rate at which the visual cards 36 are being displayed, *e.g.,* a faster rate may require a greater time difference 70.

The rate at which the visual cards 36 are successively displayed may be increased in response to the user taking a suitable action. For example, as shown in FIG. 5, the rate at which visual cards 36 are successively displayed may gradually increase from a minimum rate 72 to a maximum rate 74 (preferably at or below the user's recognition threshold). Alternatively, as shown in FIG. 6, the display rate may increase from a minimum rate 76 to an intermediate rate 78 to a maximum rate 80 according to a stepwise function. The user action to increase the display rate may take many forms, such as holding down a button on the remote control 18 for a set amount of time. In such case, the rate may be increased based on how long the button is held down. Alternatively, the user may increase the display rate by repeatedly pressing a button on the remote control 18, in which case the rate may be increased each time the button is pressed.

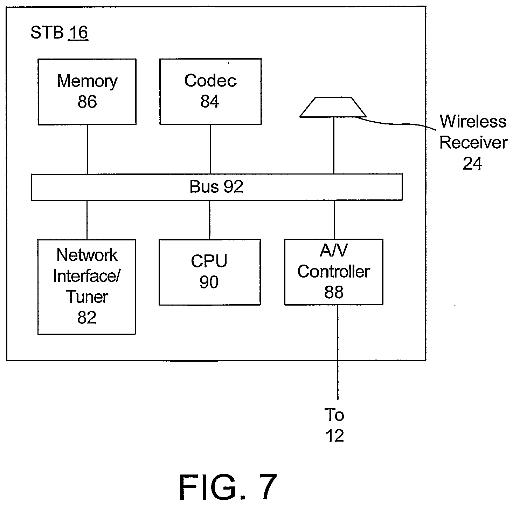

Referring now to FIG. 7, a block diagram of physical components within the STB 16 is shown. In one implementation, the STB 16 includes a wireless receiver 24 for receiving control signals sent by the wireless transmitter 22 in the remote control 18. The STB 16 may also include a network interface/tuner 82 for receiving an ITV signal (which may include both TV signals and other information) from a broadcast center (not shown) over a transmission medium, such as a broadband network. The interface/tuner 82 may include conventional tuning circuitry for receiving, demodulating, and demultiplexing the ITV signal, which may be encoded using MPEG or the like.

The STB 16 may also include a codec (encoder/decoder) 84, which serves to decode a data stream received from the broadcast center over the transmission medium. The codec 84 may be implemented in hardware and/or software.

In certain embodiments, the STB 16 includes a memory device 86. The memory device 86 may include a random access memory (RAM) for storing temporary data. Alternatively, or in addition, the memory device 86 may include a read-only memory (ROM) for storing more permanent data, such as fixed code and configuration data. For instance, the memory device 86 may include an operating system (OS) for the STB 16, such as Linux^{®} or Windows CE^{®} or XP^{®}. The memory device 86 may also be embodied as a magnetic storage device, such as a hard disk drive.

An audio/video (A/V) controller 88 may be provided for converting digital audio/video signals into analog signals for playback/display on the TV 12. The A/V controller 88 may be implemented using one or more physical devices, such as separate graphics and sound controllers. The A/V controller 88 may also include graphics hardware for performing bit-block transfers (bit-blits) and other graphical operations for displaying the visual cards 36 on the display screen 14.

In certain implementations, a CPU 90 is provided to control the operation of the STB 16, including the other components thereof, which are coupled to the CPU 90 via a bus 92. The CPU 90 may be embodied as a microprocessor, microcontroller, digital signal processor or other device known in the art. For instance, the CPU 90 may be embodied as an Intel^{®} x86 microprocessor. The CPU 90 performs logical and arithmetic operations based on program code stored within the memory device 86.

Of course, FIG. 7 illustrates only one possible configuration of an STB 16. Those skilled in the art will recognize that various other architectures and components may be provided. In addition, various standard components are not illustrated in order to avoid obscuring aspects of the invention.

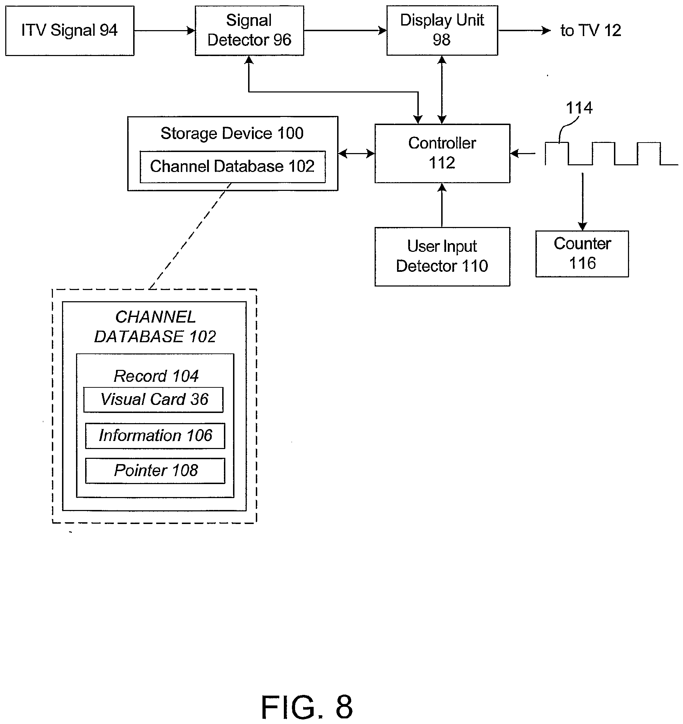

Referring now to FIG. 8, a block diagram of logical components within the STB 16 is shown. The depicted logical components may be implemented using one or more of the physical components shown in FIG. 7. Of course, various logical components may be implemented as software modules stored in the memory device 86 and executed by the CPU 90. Those skilled in the art will recognize that various illustrated components may be combined together or integrated with standard components in various configurations without departing from the scope or spirit of the invention.

An ITV signal 94 containing compressed TV signals and other information is received by a signal detector 96. The signal detector 96 decompresses the ITV signal 94 and separates the TV signals from the other information. The TV signals are then conveyed to a display unit 98, which performs further processing to convert the TV signals into a suitable format for the TV 12. The other information is routed to a storage device 100.

The other information may include a channel database 102. In one embodiment, the channel database 102 includes records 104 containing information about the various channels available within the ITV system 10. Each record 104 may be uniquely associated with a particular channel, and may include a visual card 36 representing that channel. Other information 106 about the channel may also be provided. For example, a record 104 of a broadcast channel may include information 106 such as the channel number, the name of the program being (or to be) broadcast, the start time, the end time, and so forth. For an interactive channel, the information 106 may include a text description, memory location, and the like.

Each record 104 within the database 102 may also include one or more pointers 108 to other records 104. This allows the records 104 to be grouped together into one or more sequences 40, such as the sequences 40a-b described previously. Of course, records 104 may be grouped in sequences 40 using other mechanisms within the scope of the invention.

In one embodiment, a user action to initiate and/or discontinue navigation causes a navigational control signal to be detected by a user input detector 110. The control signal may be delivered to a controller 112 which is driven by a clock signal 114 having a periodic clock cycle.

In response to a control signal to initiate navigation, the controller 112 may retrieve one or more records 104 from the channel database 102 and deliver them to the display unit 98 for processing. To implement the successive display of visual cards 36 described previously, this action may be repeated every N clock cycles (where N is any integral value). Additionally, the records 104 may be retrieved in a particular sequence 40, as described previously. The display unit 98 may be configured to prepare data from the records 104, such as the visual cards 36, for display on the display screen 14 in the manner illustrated in FIGS. 2-3. In response to a control signal to discontinue navigation, the controller 112 may halt retrieval of the records 104 from the channel database 102.

As described previously, the rate at which the visual cards 36 are successively displayed may be increased. This may be accomplished by initiating a counter 116 when the control signal to initiate navigation is detected by the user input detector 110. The counter 116 may increment every *M* clock cycles (where *M* may be any integral value), for as long as the control signal is detected by the user input detector 110. After the counter 116 has reached a set value, the value of *N* may be decreased, which has the effect of accelerating the rate of successive display of visual cards 36. In one implementation, the value of *N* may not decrease below a certain value corresponding to a typical user's image recognition threshold.

The values of *M* and *N* may be adjusted to implement the gradual and stepwise acceleration discussed previously. For example, high values of *M* and *N* correspond to stepwise acceleration as illustrated in FIG. 6, whereas low values of *M* and *N* correspond to gradual acceleration as illustrated in FIG. 5. Of course, a wide variety of other techniques may be used to implement the successive display of visual cards 36.

As discussed previously, a user's delayed response may be automatically compensated for by reverting to a previously displayed visual card 36 once the user takes action to discontinue navigation. This may be accomplished in a variety of ways. For example, the controller 112 may retrieve the record 104 *X* positions behind the last-retrieved record 104 within a particular sequence 40 once navigation has been discontinued. Alternatively, the display unit 98 may include a memory for storing the *X* visual cards 36 most recently displayed within the focus area 42, and may be configured to display the visual card 36 in the *Xth* position once navigation is discontinued. In either implementation, the value of *X* (which may be any integral value) may correspond to an anticipated time delay between a user's recognition of a desired visual card 36 and the time that the user takes action to discontinue navigation.

In certain embodiments, as discussed previously, a particular visual card 36 representing a desired channel may be displayed within the focus area 42 once navigation has been discontinued. This remaining visual card 36 may be enhanced to further distinguish it from previously displayed visual cards 36, and/or to provide the user with additional information about the represented channel. This, too, may be accomplished in a variety of ways. For example, some or all of the information 106 within each database record 104 may be displayed within the GUI 20. Alternatively, where the remaining visual card 36 represents a broadcast channel, the controller 112 may be configured to tune the signal detector 96 to the represented channel, and the display unit 98 may be configured to replace the remaining visual card 36 with a reduced-size presentation of the broadcast channel (while leaving the remainder of the GUI 20 in place). Alternatively still, the graphical representation 38 included within the visual card 36 may be an animation file, and the storage device 100 may include software configured to animate the graphical representation 38.

Finally, as discussed previously, the user may select the channel associated with a displayed visual card 36 by taking a selection action. When a visual card 36 is selected, the corresponding channel may be executed by the controller 112. For instance, where a user selects a visual card 36 corresponding to a broadcast channel, the controller 112 may tune the signal detector 96 to the selected channel. Where a user selects a visual card 36 corresponding to an interactive channel, the controller 112 may execute an application within the storage device 100 corresponding to the selected channel.

Of course, FIG. 8 illustrates only one implementation of the above-described techniques. Various other implementations, using various combinations of hardware and software, may be known to those skilled in the art based on the teachings contained herein.

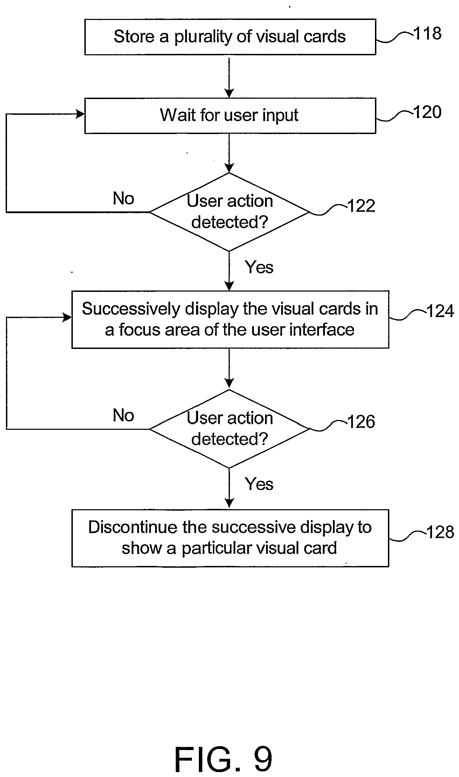

Referring now to FIG. 9, there is shown a flowchart illustrating a method for focused navigation of a plurality of channels within an ITV user interface. A plurality of visual cards 36 representing channels available within the ITV system 10 is created and stored 118. As discussed previously, the visual cards 36 may be linked together or grouped in one or more sequences 40. One or more visual cards 36 from one or more sequences 40 may be displayed across the GUI 20, with one visual card 36 being displayed within a focus area 42.

In one configuration, the ITV system 10 waits 120 for user input. When a single user action is detected 122 as previously discussed, the visual cards 36 from a particular sequence are successively displayed 124 in a focus area 42 of the GUI 20. This successive display continues until an additional user action is detected 126, at which point the successive display is discontinued and a single visual card 36 is displayed within the focus area 42. As discussed previously, this remaining visual card 36 may be enhanced. In addition, the user may select the channel associated with the displayed visual card 36 by taking a selection action.

In view of the foregoing, the present invention offers a number of advantages not available in conventional approaches. In accordance with the invention, visual cards representing channels available in an ITV system may be successively and rapidly displayed within a focus area.

Because navigation is initiated by a single user action, the user need not repeatedly press a button to display each channel, as is often the case with conventional television or ITV interfaces. This greatly increases navigation speed, reduces wear on the remote control, and reduces the likelihood of repetitive stress injury of the user's hand.

Likewise, because the visual cards are all displayed within a single area of the user interface (the focus area), the visual cards may be displayed at a relatively high rate of speed, while still being within the user's image recognition threshold.

Typically, the focused navigation technique of the claimed invention allows a user to more quickly and efficiently locate and select a desired channel than conventional approaches.

## Claims

1. A method for focused navigation of a plurality of channels within a user interface (20) of an interactive television (ITV) system (10), the method comprising:
storing a first plurality of visual cards (40a), each of the first plurality of visual cards (40a) graphically representing a broadcast channel associated with the ITV system (10);
storing a second plurality of visual cards (40b), each of the second plurality of visual cards (40b) graphically representing an interactive channel associated with the ITV system (10);
displaying the first plurality of visual cards (40a) along a first axis within the user interface (20);
displaying the second plurality of visual cards (40b) along a second axis different to the first axis within the user interface (20);
in response to a first user action, successively displaying the first plurality of visual cards (40a) in a focus area (42) of the user interface (20), wherein the focus area (42) is defined by an intersection of the first and second axes;
in response to a second user action, successively displaying the second plurality of visual cards (40b) in the focus area (42) of the user interface (20); and
in response to a third user action, discontinuing the successive display of the first or second plurality of visual cards (40a, 40b) to show a particular visual card (36) representing a desired channel in the focus area (42),
wherein the visual cards (36) are successively displayed at a maximum rate approximating a user's image recognition threshold, and wherein the method further comprises determining a user's image recognition threshold.

2. The method of claim 1, wherein the interactive channels are selected from the group consisting of a World Wide Web browser, an e-mail program, a videophone, a personal video recorder, and a directory of contacts.

3. The method of claim 1, wherein at least one broadcast channel is graphically represented on a visual card (36) by a video frame taken from a television program.

4. The method of claim 1, wherein a displayed visual card (36) in the focus area (42) occupies between about one-fifth and about one-fourth of a television screen (14).

5. The method of claim 1, wherein the focus area (42) comprises a center portion of the ITV user interface (20).

6. The method of claim 1, wherein the first and third user actions comprise pressing and holding down separate controls on a remote control (18).

7. The method of claim 6, wherein the second user action comprises releasing the respective control on the remote control (18).

8. The method of claim 1, wherein the first and third user actions comprise activating separate controls on a remote control (18).

9. The method of claim 8, wherein the second user action comprises re-activating the respective control (18).

10. The method of claim 8, wherein the second user action comprises activating a separate control on the remote control (18).

11. The method of claim 1, further comprising:
enhancing the visual card (36) shown in the focus area (42) in response to the additional user action.

12. The method of claim 11, wherein enhancing a visual card (36) associated with a broadcast channel comprises displaying a reduced-size presentation of the broadcast channel in place of the visual card (36).

13. The method of claim 11, wherein enhancing a visual card (36) comprises displaying information within the user interface (20) that is descriptive of the represented channel.

14. The method of claim 11, wherein enhancing a visual card (36) associated with an interactive channel comprises animating a graphical representation on the visual card (36).

15. The method of claim 1, wherein discontinuing comprises reverting to a previously-displayed visual card (36) in response to the additional user action.

16. The method of claim 1, further comprising:
displaying the desired channel in place of the user interface (20) in response to a selection action by the user.

17. The method of claim 16, wherein the selection action comprises activating a selection control on a remote control (18).

18. The method of claim 16, wherein the selection action comprises not activating a control on a remote control (18) for a set amount of time.

19. The method of claim 1, wherein the visual cards (36) are successively displayed at a user-selected rate between about five representations per second and about eight representations per second.

20. The method of claim 1, further comprising:
increasing a rate at which the visual cards (36) are successively displayed in response to a user command.

21. The method of claim 20, wherein the user command comprises holding down a button on a remote control (18).

22. The method of claim 21, wherein the rate is increased based on how long the button is held down.

23. The method of claim 20, wherein the user command comprises pressing a button on a remote control (18).

24. The method of claim 23, wherein the rate is increased each time the button is pressed.

25. A system (10) for focused navigation of a plurality of channels within a user interface (20), the system comprising:
a storage device (86) configured to store a first plurality of visual cards (40a) and a second plurality of visual cards (40b), each of the first plurality of the visual cards (40a) representing a broadcast channel associated with the system (10), each of the first plurality of visual cards (40a) comprising a graphical representation of the represented broadcast channel, each of the second plurality of visual cards (40b) representing an interactive channel associated with the system (10), each of the second plurality of visual cards (40b) comprising a graphical representation of the represented interactive channel;
a user input detector (88) configured to detect user actions; and
a display unit (14) configured to display the first plurality of visual cards (40a) along a first axis and the second plurality of visual cards (40b) along a second axis different to the first axis, wherein an intersection of the first axis and the second axis defines a focus area (42) of the user interface (20), and wherein the display unit (14) is further configured to display the first plurality of visual cards (40a) in the focus area (42) in response to a first user action being detected, to successively display the second plurality of visual cards (40b) in the focus area (42) in response to a second user action being detected; and to discontinue the successive display of the first or second plurality of visual cards (40a, 40b) to show a particular visual card (36) of a desired channel in the focus area (42) in response to a third user action being detected,
wherein the visual cards (36) are successively displayed at a maximum rate approximating a user's image recognition threshold, and wherein the method further comprises determining a user's image recognition threshold.

## Patentansprüche

1. Ein Verfahren für eine fokusbasierte Navigation zwischen einer Vielzahl von Kanälen innerhalb einer Benutzerschnittstelle (20) eines interaktiven Fernsehsystems (ITV, 10), wobei das Verfahren folgende Schritte umfasst:
Speichern einer ersten Vielzahl von visuellen Karten (40a), wobei jede der ersten Vielzahl von visuellen Karten (40a) graphisch einen Sendekanal, welcher dem ITV-System (10) zugeordnet ist, repräsentiert;
Speichern einer zweiten Vielzahl von visuellen Karten (40b), wobei jede der zweiten Vielzahl von visuellen Karten (40b) graphisch einen interaktiven Kanal, welcher dem ITV-System (10) zugeordnet ist, repräsentiert;
Anzeigen der ersten Vielzahl von visuellen Karten (40a) entlang einer ersten Achse innerhalb der Benutzerschnittstelle (20);
Anzeigen der zweiten Vielzahl von visuellen Karten (40b) entlang einer zweiten Achse, welche unterschiedlich zu der ersten Achse ist, innerhalb der Benutzerschnittstelle (20);
Anzeigen der ersten Vielzahl von visuellen Karten (40a) aufeinanderfolgend in einem Fokusbereich (42) der Benutzerschnittstelle (20) in Antwort auf eine erste Benutzeraktion, wobei der Fokusbereich (42) durch einen Schnittpunkt der ersten Achse mit der zweiten Achse definiert ist;
Anzeigen der zweiten Vielzahl von visuellen Karten (40b) aufeinanderfolgend in dem Fokusbereich (42) der Benutzerschnittstelle (20) in Antwort auf eine zweite Benutzeraktion; und
Unterbrechen des aufeinanderfolgenden Anzeigens der ersten oder der zweiten Vielzahl von visuellen Karten (40a, 40b) in Antwort auf eine dritte Benutzeraktion, um eine bestimmte visuelle Karte (36), welche einen gewünschten Kanal repräsentiert, in dem Fokusbereich (42) zu zeigen,
wobei die visuellen Karten (36) aufeinanderfolgend mit einer maximalen Geschwindigkeit, welche annähernd an einen Bilderkennungsschwellenwert des Benutzers heranreicht, angezeigt werden, und wobei das Verfahren weiter ein Bestimmen eines Bilderkennungsschwellenwertes eines Benutzers umfasst.

2. Das Verfahren nach Anspruch 1, wobei die interaktiven Kanäle aus einer Gruppe ausgewählt werden, welche aus einem World-Wide-Web-Browser, einem E-Mail-Programm, einem Videophon, einem persönlichen Videorecorder, und einem Kontaktverzeichnis besteht.

3. Das Verfahren nach Anspruch 1, wobei mindestens einen Sendekanal auf einer visuellen Karte (36) graphisch durch ein Videobild, welches einem Fernsehprogramm entnommen wurde, dargestellt wird.

4. Das Verfahren nach Anspruch 1, wobei eine in dem Fokusbereich (42) angezeigte visuelle Karte (36) zwischen ungefähr einem Fünftel und ungefähr einem Viertel der Fernsehbildschirmfläche (14) belegt.

5. Das Verfahren nach Anspruch 1, wobei der Fokusbereich (42) einen zentralen Bereich der ITV-Benutzerschnittstelle (20) umfasst.

6. Das Verfahren nach Anspruch 1, wobei die erste und die zweite Benutzeraktion ein Drücken und Niederhalten von unterschiedlichen Steuerungen auf einer Fernbedienung (18) umfassen.

7. Das Verfahren nach Anspruch 6, wobei die zweite Benutzeraktion ein Loslassen der entsprechenden Steuerung auf der Fernbedienung (18) umfasst.

8. Das Verfahren nach Anspruch 1, wobei die erste und die zweite Benutzeraktion ein Aktivieren von unterschiedlichen Steuerungen auf der Fernbedienung (18) umfassen.

9. Das Verfahren nach Anspruch 8, wobei die zweite Benutzeraktion ein erneutes Aktivieren der entsprechenden Steuerung (18) umfasst.

10. Das Verfahren nach Anspruch 8, wobei die zweite Benutzeraktion ein Aktivieren einer unterschiedlichen Steuerung auf der Fernbedienung (18) umfasst.

11. Das Verfahren nach Anspruch 1, weiter umfassend:
Hervorheben der visuellen Karte (36), welche in Antwort auf die zusätzliche Benutzeraktion in dem Fokusbereich (42) gezeigt wird.

12. Das Verfahren nach Anspruch 11, wobei das Hervorheben einer visuellen Karte (36), welche mit einem Sendekanal verknüpft ist, ein Anzeigen einer Darstellung des Sendekanals mit reduzierter Größe an Stelle der visuellen Karte (36) umfasst.

13. Das Verfahren nach Anspruch 11, wobei das Hervorheben einer visuellen Karte (36) ein Anzeigen von Informationen innerhalb der Benutzerschnittstelle (20) umfasst, welche beschreibend für den repräsentierten Kanal sind.

14. Das Verfahren nach Anspruch 11, wobei das Hervorheben einer visuellen Karte (36), welche mit einem interaktiven Kanal verknüpft ist, ein Animieren einer graphischen Darstellung auf der visuellen Karte (36) umfasst.

15. Das Verfahren nach Anspruch 1, wobei das Unterbrechen in Antwort auf die zusätzliche Benutzeraktion ein Zurückkehren zu einer zuvor angezeigten visuellen Karte (36) umfasst.

16. Das Verfahren nach Anspruch 1, weiter umfassend:
Anzeigen des gewünschten Kanals an Stelle der Benutzerschnittstelle (20) in Antwort auf eine Auswahlaktion des Benutzers.

17. Das Verfahren nach Anspruch 16, wobei die Auswahlaktion ein Aktivieren einer Auswahlsteuerung auf einer Fernbedienung (18) umfasst.

18. Das Verfahren nach Anspruch 16, wobei die Auswahlaktion ein Nicht-Aktivieren einer Steuerung auf einer Fernbedienung (18) für eine bestimmte Zeitdauer umfasst.

19. Das Verfahren nach Anspruch 1, wobei die visuellen Karten (36) aufeinanderfolgend mit einer vom Benutzer ausgewählten Geschwindigkeit zwischen ungefähr 5 Darstellungen pro Sekunde und ungefähr 8 Darstellungen pro Sekunde angezeigt werden.

20. Das Verfahren nach Anspruch 1, weiter umfassend:
Erhöhen einer Geschwindigkeit, mit welcher die visuellen Karten (36) aufeinanderfolgend angezeigt werden, in Antwort auf einen Benutzerbefehl.

21. Das Verfahren nach Anspruch 20, wobei der Benutzerbefehl ein Niederhalten einer Taste auf einer Fernbedienung (18) umfasst.

22. Das Verfahren nach Anspruch 21, wobei die Geschwindigkeit basierend darauf, wie lange die Taste niedergehalten wird, erhöht wird.

23. Das Verfahren nach Anspruch 20, wobei der Benutzerbefehl ein Drücken einer Taste auf einer Fernbedienung (18) umfasst.

24. Das Verfahren nach Anspruch 23, wobei die Geschwindigkeit jedes Mal, wenn die Taste gedrückt wird, erhöht wird.

25. Ein System (10) für eine fokusbasierte Navigation zwischen einer Vielzahl von Kanälen innerhalb einer Benutzerschnittstelle (20), wobei das System folgende Elemente umfasst:
ein Speichergerät (86), welches derart konfiguriert ist, dass es eine erste Vielzahl von visuellen Karten (40a) und eine zweite Vielzahl von visuellen Karten (40b) speichert, wobei jede der ersten Vielzahl von visuellen Karten (40a) einen Sendekanal, welcher dem System (10) zugeordnet ist, repräsentiert, wobei jede der ersten Vielzahl von visuellen Karten (40a) eine grafische Darstellung des repräsentierten Sendekanals umfasst, wobei jede der zweiten Vielzahl von visuellen Karten (40 b) einen interaktiven Kanal, welcher dem System (10) zugeordnet ist, repräsentiert, wobei jede der zweiten Vielzahl von visuellen Karten (40b) eine grafische Darstellung des repräsentierten interaktiven Kanals umfasst;
einen Benutzereingabedetektor (88), welche derart konfiguriert ist, dass er Benutzeraktionen detektiert; und
eine Anzeigeeinheit (14), welche derart konfiguriert ist, dass sie die erste Vielzahl von visuellen Karten (40a) entlang einer ersten Achse und die zweite Vielzahl von visuellen Karten (40b) entlang einer zweiten Achse, welche unterschiedlich zu der ersten Achse ist, anzeigt, wobei ein Schnittpunkt der ersten Achse und der zweiten Achse einen Fokusbereich (42) der Benutzerschnittstelle (20) definiert, und wobei die Anzeigeeinheit (14) weiter derart konfiguriert ist, dass sie in Antwort darauf, dass eine erste Benutzeraktion detektiert wird, die erste Vielzahl von visuellen Karten (40a) in dem Fokusbereich (42) anzeigt, in Antwort darauf, dass eine zweite Benutzeraktion detektiert wird, die zweite Vielzahl von visuellen Karten (40b) aufeinanderfolgend in dem Fokusbereich (42) anzeigt; und in Antwort darauf, dass eine dritte Benutzeraktion detektiert wird, das aufeinanderfolgende Anzeigen der ersten oder zweiten Vielzahl von visuellen Karten (40a, 40b) unterbricht, um eine bestimmte visuelle Karte (36) eines gewünschten Kanals in dem Fokusbereich (42) anzeigt,
wobei die visuellen Karten (36) aufeinanderfolgend mit einer maximalen Geschwindigkeit, welche annähernd an einen Bilderkennungsschwellenwert des Benutzers heranreicht, angezeigt werden, und wobei das Verfahren weiter ein Bestimmen eines Bilderkennungsschwellenwertes eines Benutzers umfasst.

## Revendications

1. Procédé pour navigation focalisée d'une pluralité de canaux dans une interface utilisateur (20) d'un système (10) de télévision interactive (ITV), le procédé comprenant le fait :
de stocker une première pluralité de cartes visuelles (40a), chacune de la première pluralité de cartes visuelles (40a) représentant graphiquement un canal de diffusion associé au système ITV (10) ;
de stocker une deuxième pluralité de cartes visuelles (40b), chacune de la deuxième pluralité de cartes visuelles (40b) représentant graphiquement un canal interactif associé au système ITV (10) ;
d'afficher la première pluralité de cartes visuelles (40a) le long d'un premier axe dans l'interface utilisateur (20) ;
d'afficher la deuxième pluralité de cartes visuelles (40b) le long d'un deuxième axe différent du premier axe dans l'interface utilisateur (20) ;
d'afficher successivement, en réponse à une première action d'utilisateur, la première pluralité de cartes visuelles (40a) dans une zone de focalisation (42) de l'interface utilisateur (20), où la zone de focalisation (42) est définie par une intersection des premier et deuxième axes ;
d'afficher successivement, en réponse à une deuxième action d'utilisateur, la deuxième pluralité de cartes visuelles (40b) dans la zone de focalisation (42) de l'interface utilisateur (20) ; et
d'interrompre l'affichage successif de la première ou de la deuxième pluralité de cartes visuelles (40a, 40b), en réponse à une troisième action d'utilisateur, pour montrer une carte visuelle particulière (36) représentant un canal souhaité dans la zone de focalisation (42),
dans lequel les cartes visuelles (36) sont affichées successivement à une vitesse maximale s'approchant d'un seuil de reconnaissance d'image d'un utilisateur, et dans lequel le procédé comprend en outre le fait de déterminer un seuil de reconnaissance d'image d'un utilisateur.

2. Procédé de la revendication 1, dans lequel les canaux interactifs sont choisis dans le groupe constitué d'un navigateur Web international, d'un programme de courrier électronique, d'un vidéophone, d'un enregistreur vidéo personnel et d'un répertoire de contacts.

3. Procédé de la revendication 1, dans lequel au moins un canal de diffusion est représenté graphiquement sur une carte visuelle (36) par une trame vidéo prise d'une émission de télévision.

4. Procédé de la revendication 1, dans lequel une carte visuelle (36) affichée dans la zone de focalisation (42) occupe entre environ un cinquième et environ un quart d'un écran de télévision (14).

5. Procédé de la revendication 1, dans lequel la zone de focalisation (42) comprend une partie centrale de l'interface utilisateur ITV (20).

6. Procédé de la revendication 1, dans lequel les première et troisième actions d'utilisateur comprennent le fait d'appuyer et de maintenir enfoncées des commandes distinctes sur une télécommande (18).

7. Procédé de la revendication 6, dans lequel la deuxième action d'utilisateur comprend le fait de relâcher la commande respective sur la télécommande (18).

8. Procédé de la revendication 1, dans lequel les première et troisième actions d'utilisateur comprennent le fait d'activer des commandes distinctes sur une télécommande (18).

9. Procédé de la revendication 8, dans lequel la deuxième action d'utilisateur comprend le fait de réactiver la commande respective (18).

10. Procédé de la revendication 8, dans lequel la deuxième action d'utilisateur comprend le fait d'activer une commande distincte sur la télécommande (18).

11. Procédé de la revendication 1, comprenant en outre le fait d'améliorer la carte visuelle (36) montrée dans la zone de focalisation (42) en réponse à l'action d'utilisateur supplémentaire.

12. Procédé de la revendication 11, dans lequel l'amélioration d'une carte visuelle (36) associée à un canal de diffusion comprend le fait d'afficher une présentation de taille réduite du canal de diffusion à la place de la carte visuelle (36).

13. Procédé de la revendication 11, dans lequel l'amélioration d'une carte visuelle (36) comprend le fait d'afficher des informations dans l'interface utilisateur (20) qui décrivent le canal représenté.

14. Procédé de la revendication 11, dans lequel l'amélioration d'une carte visuelle (36) associée à un canal interactif comprend le fait d'animer une représentation graphique sur la carte visuelle (36).

15. Procédé de la revendication 1, dans lequel l'interruption comprend le fait de retourner à une carte visuelle (36) précédemment affichée en réponse à l'action d'utilisateur supplémentaire.

16. Procédé de la revendication 1, comprenant en outre le fait d'afficher le canal souhaité à la place de l'interface utilisateur (20) en réponse à une action de sélection par l'utilisateur.

17. Procédé de la revendication 16, dans lequel l'action de sélection comprend le fait d'activer une commande de sélection sur une télécommande (18).

18. Procédé de la revendication 16, dans lequel l'action de sélection comprend le fait de ne pas activer une commande sur une télécommande (18) pendant une durée définie.

19. Procédé de la revendication 1, dans lequel les cartes visuelles (36) sont affichées successivement à une vitesse sélectionnée par l'utilisateur comprise entre environ cinq représentations par seconde et environ huit représentations par seconde.

20. Procédé de la revendication 1, comprenant en outre le fait d'augmenter une vitesse à laquelle les cartes visuelles (36) sont successivement affichées en réponse à une instruction d'utilisateur.

21. Procédé de la revendication 20, dans lequel l'instruction d'utilisateur comprend le fait de maintenir enfoncé un bouton sur une télécommande (18).

22. Procédé de la revendication 21, dans lequel la vitesse augmente en fonction de la durée pendant laquelle le bouton est maintenu enfoncé.

23. Procédé de la revendication 20, dans lequel l'instruction d'utilisateur comprend le fait d'appuyer sur un bouton sur une télécommande (18).

24. Procédé de la revendication 23, dans lequel la vitesse augmente chaque fois que l'on appuie sur le bouton.

25. Système (10) pour navigation focalisée d'une pluralité de canaux dans une interface utilisateur (20), le système comprenant :
un dispositif de stockage (86) configuré pour stocker une première pluralité de cartes visuelles (40a) et une deuxième pluralité de cartes visuelles (40b), chacune de la première pluralité des cartes visuelles (40a) représentant un canal de diffusion associé au système (10), chacune de la première pluralité de cartes visuelles (40a) comprenant une représentation graphique du canal de diffusion représenté, chacune de la deuxième pluralité de cartes visuelles (40b) représentant un canal interactif associé au système (10), chacune de la deuxième pluralité de cartes visuelles (40b) comprenant une représentation graphique du canal interactif représenté ;
un détecteur d'entrée utilisateur (88) configuré pour détecter des actions d'utilisateur ; et
une unité d'affichage (14) configurée pour afficher la première pluralité de cartes visuelles (40a) le long d'un premier axe et la deuxième pluralité de cartes visuelles (40b) le long d'un deuxième axe différent du premier axe, où une intersection du premier axe et du deuxième axe définit une zone de focalisation (42) de l'interface utilisateur (20), et où l'unité d'affichage (14) est en outre configurée pour afficher la première pluralité de cartes visuelles (40a) dans la zone de focalisation (42) en réponse à la détection d'une première action d'utilisateur, pour afficher successivement la deuxième pluralité de cartes visuelles (40b) dans la zone de focalisation (42) en réponse à la détection d'une deuxième action d'utilisateur ; et pour interrompre l'affichage successif de la première ou de la deuxième pluralité de cartes visuelles (40a, 40b) afin de montrer une carte visuelle particulière (36) d'un canal souhaité dans la zone de focalisation (42) en réponse à la détection d'une troisième action d'utilisateur,
dans lequel les cartes visuelles (36) sont affichées successivement à une vitesse maximale s'approchant d'un seuil de reconnaissance d'image d'un utilisateur, et dans lequel le procédé comprend en outre le fait de déterminer un seuil de reconnaissance d'image d'un utilisateur.
